(19) Europäisches Patentamt
European Patent Office
Office européen des brevets

(11) **EP 2 875 892 A1**

(12) **EUROPÄISCHE PATENTANMELDUNG**

(43) Veröffentlichungstag:
**27.05.2015 Patentblatt 2015/22**

(51) Int Cl.:
***B23F 19/05*** (2006.01)　***F16H 55/08*** (2006.01)

(21) Anmeldenummer: **13193983.7**

(22) Anmeldetag: **22.11.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **MDC Max Daetwyler AG St. Gallen 9015 St. Gallen (CH)**

(72) Erfinder: **Widmer, Kurt**
**8357 Guntershausen (CH)**

(74) Vertreter: **Kessler, Stephan et al**
**Keller & Partner Patentanwälte AG**
**Eigerstrasse 2**
**Postfach**
**3000 Bern 14 (CH)**

(54) **Abrichtrad/Werkstück mit zwei Ballen**

(57)　Die 3-dimensionale Topographie eines Zahns eines erfindungsgemäßen Zahnrads bzw. Abrichtrads zeigt eine linke Zahnflanke 20, eine rechte Zahnflanke 21, sowie eine Scheitellinie 22 mit einer Länge, die im Wesentlichen der Breite B des Zahns 2 des Zahnrads bzw. Abrichtrads entspricht. Die Oberflächen der Zahnflanken 20 und 21 weisen konvexe Ausbuchtungen 201 bzw. 202 sowie einen Graben 203 auf, wobei sich der Graben 203 zwischen den konvexen Ausbuchtungen 201 und 202 im Bereich zwischen Fuß und radial äußerer Scheitellinie 22 des Zahns 2 erstreckt. Die konvexen Ausbuchtungen (Ballen) 201 und 202 erstrecken sich von den Kanten 204 bzw. 205 des Zahns 2 bis zum Graben 203. Mithilfe eines derartigen Zahnrads 10 können Verzahnungen hergestellt bzw. bereitgestellt werden, die eine leichte Gängigkeit mit einer Gegenverzahnung bieten.

Fig. 5

EP 2 875 892 A1

**Beschreibung**

TECHNISCHES GEBIET

Die vorliegende Anmeldung bezieht sich auf ein Abrichtrad für ein Honwerkzeug, ein Zahnrad bzw. eine Verzahnung, ein Honwerkzeug (Honstein, Honrad) und eine Zahnradhonmaschine mit Honwerkzeug, wobei das Abrichtrad bzw. Zahnrad eine Rotationsachse aufweisen und eine Verzahnung mit einer Vielzahl von Zähnen umfassen, die jeweils wenigstens eine Flanke aufweisen. Das Honwerkzeug bzw. weist eine dazu komplementäre Außen- oder Innenverzahnung auf.

STAND DER TECHNIK

Schalt- oder Wechselgetriebe weisen Wellen mit einer Vielzahl von an der Welle ausgebildeten Zahnrädern unterschiedlichen Durchmessers auf.

Um zu erreichen, dass der Eingriff der Zahnräder möglichst leichtgängig ist, d. h. Geräuschbildung und Reibungsverluste möglichst gering sind, werden die Zahnräder, insbesondere die Zahnflanken, nachbearbeitet. Ein bekanntes Nachbearbeitungsverfahren ist das Honverfahren. Dabei wird die Oberfläche der Zahnflanken durch Eingriff eines ebenfalls verzahnten Honrads bzw. Honsteins mikroskopisch nachbearbeitet. Da Hon- bzw. Schleifwerkzeuge mit der Zeit ihr Profil einbüßen, müssen die Werkzeuge selbst von Zeit zu Zeit nachbearbeitet werden. Dazu wird ein hartes, beispielsweise diamantbesetztes sog. Abrichtrad eingesetzt.

Die Nachbearbeitung kann sich sowohl auf die Oberflächenstruktur als auch auf das axiale/radiale Profil der Zahnflanken beziehen.

AUFGABE DER ERFINDUNG

Ausgehend davon besteht die Aufgabe der vorliegenden Erfindung darin, ein Zahnrad derart nachzubearbeiten, dass die Leichtgängigkeit des Eingriffs eines Zahnrads mit einer Gegenverzahnung gesteigert wird. Außerdem sollen ein Honwerkzeug und ein Abrichtwerkzeug für ein Honwerkzeug bereitgestellt werden, mit denen eine derartige Nachbearbeitung ermöglicht wird.

TECHNISCHE LÖSUNG

Diese Aufgabe wird gelöst durch die Bereitstellung eines Abrichtrads und eines Zahnrads nach Anspruch 1, eines Honwerkzeugs nach Anspruch 8 und einer Zahnradhonmaschine nach Anspruch 10. Vorteilhafte Ausgestaltungen der Erfindung sind Gegenstand der abhängigen Ansprüche.

Ein erfindungsgemäßes Abrichtrad oder Zahnrad umfasst eine Rotationsachse, eine Verzahnung mit einer Vielzahl von Zähnen, die jeweils wenigstens eine Flanke aufweisen, wobei eine axial entlang der Flanke ermittelte Flankenlinie der Länge B eine von einer Geraden abweichende Geometrie aufweist. Die Flankenlinie weist entlang der Länge B wenigstens zwei konvexe Ausbuchtungen (Ballen) auf.

Mithilfe des erfindungsgemäßen Abrichtrads, das insbesondere eine Beschichtung, beispielsweise eine Diamantbeschichtung, aufweist, können Werkzeuge zur Fein-/Endbearbeitung von Zahnrädern für spezielle Einsatzzwecke bearbeitet werden. Die so hergestellten Zahnräder sind ebenfalls Gegenstand der Erfindung. Sie weisen ebenfalls eine Rotationsachse und eine Verzahnung mit einer Vielzahl von Zähnen auf, die jeweils wenigstens eine Flanke aufweisen, wobei eine axial entlang der Flanke ermittelte Flankenlinie der Länge B eine von einer Geraden abweichende Geometrie aufweist. Die Flankenlinie weist entlang der Länge B wenigstens zwei konvexe Ausbuchtungen auf. Das Profil bzw. die axialen Profillinien der Zahnflanken entsprechen dabei im Wesentlichen dem Profil der erfindungsgemäßen Abrichträder.

Derartige Zahnräder bzw. Verzahnungen sind besonders geeignet für Anwendungen, bei denen verschiedene Zahnräder als Gegenverzahnung von unterschiedlichen Seiten her mit dem Zahnrad bzw. der Verzahnung in Eingriff gebracht werden. Dies ist beispielsweise bei einem Getriebe für Verzahnungen der Fall, in die von der einen Seite axial ein Zahnrad für einen Vorwärtsgang eingreift, während von der anderen Seite axial ein Zahnrad für einen Rückwärtsgang eingreift. Diese eingreifenden Zahnräder sind meist nicht über die gesamte axiale Erstreckung des Zahnrads in Kontakt, sondern nur über einen Teilabschnitt. Aus diesem Grund ist es vorteilhaft, wenn sich die erste konvexe Struktur in etwa über den Eingriffsabschnitt des ersten eingreifenden Zahnrads, die zweite konvexe Struktur über den Eingriffsbereich des zweiten eingreifenden Zahnrads erstreckt. Auf diese Weise wird ein leichtgängiges Getriebe sowohl für den Vorwärtsgang als auch für den Rückwärtsgang bereitgestellt.

Die Ausbuchtungen sind konvexe Erhebungen, die nebeneinander angeordnet sind und sich flächig axial entlang jeweils eines Abschnitts der Zahnflanke erstrecken. Die Zahnflanke weist somit zwei sich axial hintereinander entlang der Zahnflanke erstreckende Ballen oder Ausbuchtungen auf. Vorzugsweise ist die erste Ausbuchtung in Form eines Abschnitts eines ersten Kreisbogens, die zweite Ausbuchtung in Form eines Abschnitts eines zweiten Kreisbogens ausgebildet. Die Kreisbögen der ersten Ausbuchtung und der zweiten Ausbuchtung können denselben oder unterschiedliche Radien haben. Außerdem können sich die Ausbuchtungen über unterschiedliche axiale Längen entlang der Zahnflanke erstrecken.

Beispielsweise kann sich die erste Ausbuchtung entlang der Flankenlinie entlang eines ersten Bruchteils u/B (u/B < 1) der Länge B der Flankenlinie und die zweite Ausbuchtung entlang eines zweiten Bruchteils v/B (v/B < 1) der Länge B der Flankenlinie erstrecken, wobei $v/L + u/L \leq 1$ ist.

Vorzugsweise ist v in etwa gleich groß wie u. Insbesondere kann folgende Beziehung gelten:

$$v/L + u/L = 1.$$

Insbesondere weist die Zahnflanke wenigstens einen sich zwischen zwei Ausbuchtungen radial erstreckenden zurückgesetzten Bereich auf. Bei zwei Ausbuchtungen bedeutet dies, dass zwischen diesen Ausbuchtungen ein zurückgesetzter Bereich, etwa in Form eines Grabens, vorhanden ist. Die Ausbuchtungen sind in Umfangsrichtung konvex hinsichtlich der Kontaktfläche eines eingreifenden Zahnrads ausgebildet, der zurückgesetzte Bereich ist in Umfangrichtung gegenüber der Kontaktfläche eines eingreifenden Zahnrads zurückgesetzt.

Die Ausbuchtungen können jeweils Scheitellinien aufweisen, wobei der zurückgesetzte Bereich gegenüber den Scheitelpunkten einen Abstand zwischen 5 μm und 25 μm aufweist.

Die benachbart zu den Rändern der Zähne angeordneten Ausbuchtungen erstrecken sich jeweils konkav vom Rand der Zahnflanke über eine axiale Länge u bzw. v zu einem im mittleren axialen Bereich der Zahnflanke liegenden Bereich, insbesondere zum zurückgesetzten Bereich (Graben). Dabei ist in einem mittleren Bereich der Abschnitte u und v jeweils ein Scheitelpunkt vorhanden, der in Umfangsrichtung des Abrichtrades bzw. des Zahnrads bzw. der Verzahnung hervorragt.

Ein erfindungsgemäßes Honwerkzeug umfasst einen Zahnstruktur mit einer Vielzahl von Zähnen, die jeweils wenigstens eine Flanke aufweisen, wobei das Profil der wenigstens einen Flanke komplementär zum Profil einer der Zahnflanken eines Abrichtrads bzw. Zahnrads wie oben beschrieben ausgebildet ist.

Insbesondere ist das Honwerkzeug ringförmig mit einer Innenverzahnung ausgebildet. Das Honwerkzeug kann jedoch auch in Form eines Zahnrads mit einer Außenverzahnung ausgebildet sein.

Eine erfindungsgemäße Honmaschine umfasst ein Honwerkzeug wie oben beschrieben.

KURZE BESCHREIBUNG DER FIGUREN

Weitere Merkmale und Vorteile der Erfindung ergeben sich aus der nachfolgenden Beschreibung eines bevorzugten Ausführungsbeispiels anhand der Figuren. Es zeigen:

Figur 1a    Eine Seitenansicht eines Abschnitts einer Getriebewelle gemäß der vorliegenden Erfindung;

Figur 1b    Ein erfindungsgemäßes Abrichtrad;

Figur 2    Einen Ausschnitt einer erfindungsgemäßen Zahnrads im Schnitt;

Figur 3    Eine Darstellung der Profile von Flankenlinien einiger Zähne eines erfindungsgemäßen Zahnrads bzw. unbeschichteten Abrichtrads;

Figur 4    Eine Darstellung der Profile von Flankenlinien einiger Zähne eines diamantbelegten erfindungsgemäßen Abrichtrads;

Figur 5    Eine topographische Darstellung der Oberflächen eines Zahns eines erfindungsgemäßen Zahnrads bzw. Abrichtrads.

DETAILLIERTE BESCHREIBUNG BEVORZUGTER AUSFÜHRUNGSBEISPIELE

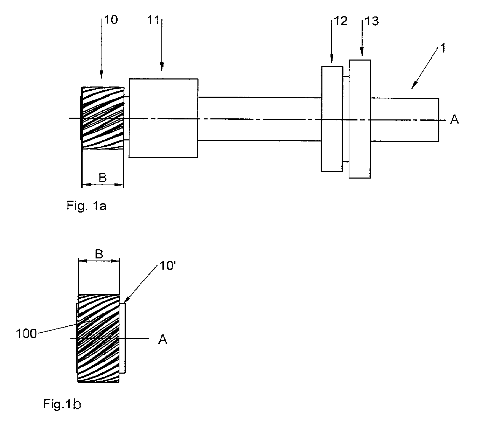

In der Figur 1a ist schematisch ein Abschnitt einer Getriebewelle 1 mit mehreren Zahnrädern bzw. Verzahnungen 10, 11, 12, 13 und einer Drehachse A dargestellt. Im diesem Ausführungsbeispiel soll die Verzahnung 10 ein erfindungsgemäßes Zahnrad mit entsprechender Topographie der Zahnflanken sein, wie es im Folgenden beschrieben wird. Die erfindungsgemäß ausgebildete Verzahnung 10 weist eine axiale Breite B auf.

In der Figur 1b ist ein dem Zahnrad 10 aus der Figur 1a entsprechendes Abrichtrad 10' dargestellt. Das Abrichtrad 10' weist prinzipiell dieselbe Zahnflankentopografie auf wie das Zahnrad 10. Das Abrichtrad 10' wird zur Bearbeitung, insbesondere zum Abrichten oder Profilieren eines Honrads bzw. Honsteins eingesetzt, mit dem wiederum das Zahnrad 10 bearbeitet wird. Auf diese Weise wird das Profil des Abrichtrads 10' auf das Zahnrad 10 mittelbar übertragen. Das Abrichtrad muss eine große Oberflächenhärte aufweisen und ist daher mit einer Diamantschicht belegt.

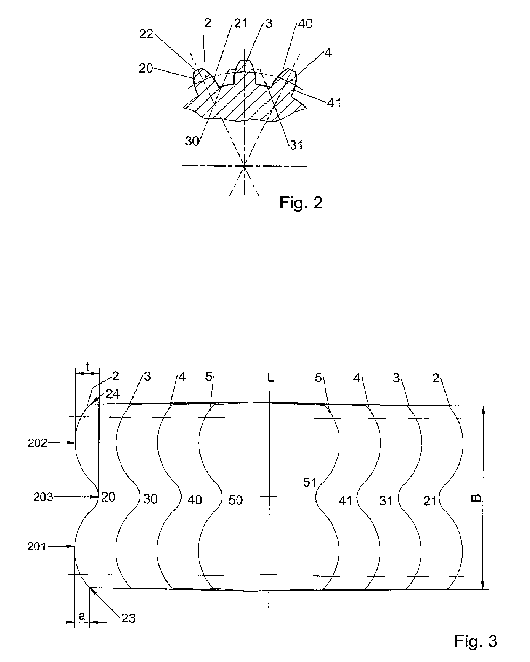

Die Figur 2 zeigt einen Ausschnitt von drei Zähnen 2, 3, 4 des Zahnrads 10 bzw. des Abrichtrads 10' aus den Figuren 1a bzw. 1b in einer zur Drehachse A senkrechten Schnittdarstellung.

Die beispielhaft dargestellten Zähne 2, 3, 4 weisen jeweils zwei Zahnflanken 20, 21; 30, 31; 40, 41, nämlich eine linke Zahnflanke 20, 30, 40 und eine rechte Zahnflanke 21, 31, 41 auf. Einige oder mehrere der Zahnflanken weisen ein erfindungsgemäßes Profil wie im Folgenden beschrieben auf.

Die Figur 3 zeigt beispielhaft die Profile linker Zahnflanken 20, 30, 40, 50 und rechter Zahnflanken 21, 31, 41, 51 von Zähnen 2, 3, 4, 5, wobei die geschwungenen Profillinien die Profile entlang der Flankenlinien darstellen, die sich etwa auf halber radialer Höhe axial über die Breite B der Zahnflanken 20, 30, 40, 50 bzw. 21, 31, 41, 51 erstrecken. Links der Linie L sind die Messwerte der Profile der linken Zahnflanken 20, 30, 40, 50, rechts der Linie L sind die Messwerte der Profile der rechten Flanken 21, 31, 41, 51 dargestellt.

Wie aus der Figur 3 deutlich wird, weist - am Beispiel der ersten linken Zahnflanke 20 erläutert - jede der Zahnflanken 20, 30, 40, 50, 21, 31, 41, 51 ein Profil mit zwei axial zueinander beabstandeten konvexen Erhebungen 201 und 202 (dargestellt nur anhand der ersten linken Flanke 20) auf. Das Profil erstreckt sich bei jeder Zahnflanke etwa vom Fuß des Zahns bis zur oberen Kante.

Zwischen den konvexen Erhebungen 201 und 202 weist das Profil jeder Zahnflanke 20, 30, 40, 50, 21, 31, 41, 51 eine Vertiefung 203 (beispielhaft an der Flanke 20 gezeigt) auf. Die Vertiefung 203 bildet einen sich in radialer Richtung der Zahnflanke 20 erstreckender Graben, der zwischen den sich radial erstreckenden konvexen Erhebungen angeordnet ist. Die Tiefe t des Grabens 203 gegenüber den Scheiteln der Erhöhungen 201 und 202 beträgt in etwa 10 μm. Die Tiefe t kann jedoch, abhängig von der Breite B der Zahnflanken, dem Radius des Zahnrads, der Anzahl der Zähne des Zahnrads, der Bemaßung der Verzahnung, etc., unterschiedliche Werte annehmen. Bei Getriebe-Anwendungen kommen beispielsweise häufig Werte für t zwischen 5 μm und 50 μm zum Einsatz.

Jede der Erhebungen 201 und 202 weist an der dem Graben 203 abgewandten Seite, nämlich an der jeweiligen Kante 23, 24 des Zahnrads 2, einen Startpunkt auf, von dem aus sich die jeweilige Erhebung 201 bzw. 202 in Umfangsrichtung konvex nach außen wölbt. Der Abstand a, der die Höhe des Scheitelpunkts 201 bzw. 202 gegenüber dem Startpunkt 23 bzw. 24 in Umfangsrichtung angibt, beträgt in etwa 25 μm. Ein im Getriebebau gängiger Bereich für den Abstand a liegt zwischen 10 μm und 100 μm.

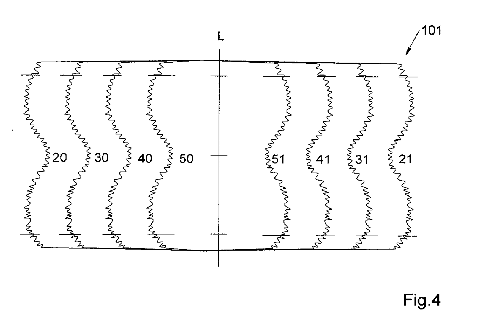

In der Figur 4 ist dieselbe Zahnstruktur wie in der Figur 3 dargestellt, allerdings für ein diamantbelegtes Abrichtrad 10' gemäß der vorliegenden Erfindung. Aufgrund der Diamantbeschichtung ist die Oberfläche der Zahnflanken 20, 30, 40, 50, 21, 31, 41, 51 mit hochfrequenten Höhenschwankungen versehen, d.h. die Oberfläche ist mikroskopisch rau. Glättet man die hochfrequenten Höhenschwankungen, so ergibt sich beidseitig im Großen und Ganzen dasselbe Profil auf wie in der Figur 3 dargestellt.

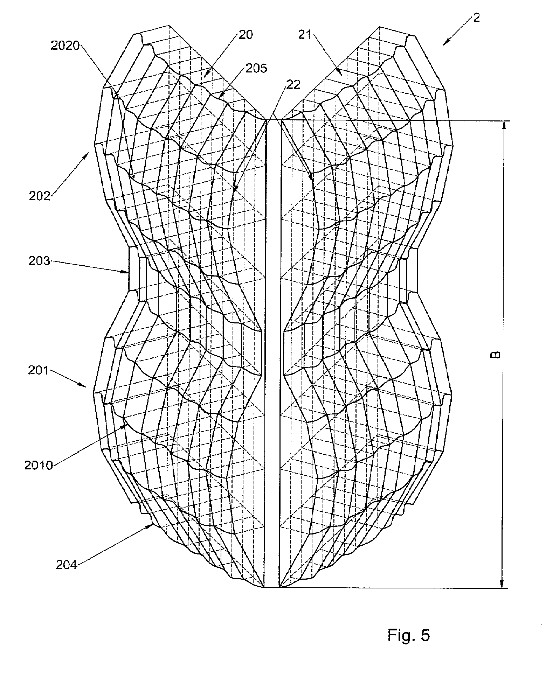

Die Figur 5 zeigt eine 3-dimensionale Topographie eines Zahns eines erfindungsgemäßen Zahnrads bzw. Abrichtrads. Die Bezugszeichen sind wie in den vorherigen Ausführungsbeispielen gewählt. Der Zahn 2 weist eine linke Zahnflanke 20, eine rechte Zahnflanke 21, sowie eine Scheitellinie 22 mit einer Länge auf, die im Wesentlichen der Breite B des Zahns 2 des Zahnrads bzw. Abrichtrads entspricht.

Die Oberflächen der Zahnflanken 20 und 21 weisen konvexe Ausbuchtungen 201 bzw. 202 mit Scheitellinien 2010 und 2020 sowie einen Graben 203 auf, wobei sich der Graben 203 zwischen den konvexen Ausbuchtungen 201 und 202 im Bereich zwischen Fuß und radial äußerer Scheitellinie 22 des Zahns 2 erstreckt. Die konvexen Ausbuchtungen (Ballen) 201 und 202 erstrecken sich von den Kanten 204 bzw. 205 des Zahns 2 bis zum Graben 203.

Mithilfe eines Zahnrads 10 bzw. einer Verzahnung bzw. eines Abrichtrads 10', die Zähne 2, 3, 4 aufweisen, wie am Beispiel des Zahns 2 beschrieben, und eines zur Topographie der Zähne 2, 3, 4 komplementär ausgebildeten Honrads, können Verzahnungen hergestellt bzw. bereitgestellt werden, die eine leichte Gängigkeit mit einer Gegenverzahnung bieten, insbesondere bei Anwendungen, bei denen der Eingriff mit einem Gegenzahnrad axial sowohl von der einen als auch von der anderen Seite erfolgen kann. Bei diesen Anwendungen beschränkt sich die Kontaktfläche zwischen dem Zahn 2 und der Gegenverzahnung häufig nur auf einen Bruchteil der Breite B, insbesondere etwa über die Breite B/2.

**Patentansprüche**

1. Abrichtrad (10') oder Zahnrad (10) mit einer Rotationsachse (A), umfassend eine Verzahnung mit einer Vielzahl von Zähnen (2, 3, 4), die jeweils wenigstens eine Flanke (20, 21; 30, 31; 40, 41) aufweisen, wobei eine axial entlang der Flanke (20, 21; 30, 31; 40, 41) ermittelte Flankenlinie der Länge B eine von einer Geraden abweichende Geometrie aufweist,
**dadurch gekennzeichnet, dass**
die Flankenlinie entlang der Länge B wenigstens zwei konvexe Ausbuchtungen (201, 202) aufweist.

2. Abrichtrad (10') oder Zahnrad (10) nach Anspruch 1,
**dadurch gekennzeichnet, dass**
eine erste Ausbuchtung (201) der wenigstens zwei Ausbuchtungen (201, 202) in Form eines Abschnitts eines ersten Kreisbogens, und eine zweite Ausbuchtung (202) der wenigstens zwei Ausbuchtungen (201, 202) in Form eines Abschnitts eines zweiten Kreisbogens ausgebildet ist.

3. Abrichtrad (10') oder Zahnrad (10) nach Anspruch 1 oder 2,
**dadurch gekennzeichnet, dass**
sich die erste Ausbuchtung (201) entlang einer Flankenlinie in einer Länge von u/B (u/B<1) in axialer Richtung, und die zweite Ausbuchtung (202) entlang der Flankenlinie in einer Länge von v/B (v/B<1) in axialer Richtung erstreckt.

4. Abrichtrad (10') oder Zahnrad (10) nach Anspruch 3,
**dadurch gekennzeichnet, dass**
v in etwa gleich groß wie u ist.

5. Abrichtrad (10') oder Zahnrad (10) nach einem der vorhergehenden Ansprüche 3 oder 4,
**dadurch gekennzeichnet, dass**
in etwa folgende Beziehung gilt: v/L + u/L = 1.

6. Abrichtrad (10') oder Zahnrad (10) nach einem der vorhergehenden Ansprüche,
**dadurch gekennzeichnet, dass**
die wenigstens eine Flanke (20, 21; 30, 31; 40, 41) wenigstens einen sich zwischen zwei Ausbuchtungen (201, 202) radial erstreckenden zurückgesetzten Bereich (203) aufweist.

**7.** Abrichtrad (10') nach einem der vorhergehenden Ansprüche,
**dadurch gekennzeichnet, dass**
das Abrichtrad (10') diamantbesetzt bzw. diamantbeschichtet ist.

**8.** Honwerkzeug, umfassend eine Rotationsachse und eine Verzahnung mit einer Vielzahl von Zähnen, wobei die Zähne wenigstens eine Flanke aufweisen, wobei das Profil der Flanke der Zähne komplementär zum Profil der Flanke eines Abrichtrads bzw. des Zahnrads nach einem der vorhergehenden Ansprüche ausgebildet ist.

**9.** Honwerkzeug nach Anspruch 8,
**dadurch gekennzeichnet, dass**
das Honwerkzeug ringförmig mit einer Innenverzahnung ausgebildet ist.

**10.** Zahnradhonmaschine, umfassend ein Honwerkzeug nach einem der Ansprüche 8 oder 9.

EP 2 875 892 A1

Fig. 1a

Fig.1b

6

Fig. 2

Fig. 3

Fig.4

Fig. 5

**Europäisches Patentamt**
**European Patent Office**
**Office européen des brevets**

## EUROPÄISCHER RECHERCHENBERICHT

Nummer der Anmeldung

EP 13 19 3983

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2007/017314 A1 (KONISHI HIDEHISA [JP]) 25. Januar 2007 (2007-01-25) | 1-6 | INV. B23F19/05 |
| Y | * das ganze Dokument * | 7-10 | F16H55/08 |
| | ----- | | |
| X | US 2005/160857 A1 (TAKEUCHI YOICHI [JP]) 28. Juli 2005 (2005-07-28) * das ganze Dokument * | 1-6 | |
| | ----- | | |
| X | JP S61 133163 U (MUG CO LTD) 20. August 1986 (1986-08-20) * Abbildung 8 * | 1-6 | |
| | ----- | | |
| X | EP 1 770 308 A2 (ENPLAS CORP [JP]) 4. April 2007 (2007-04-04) * Absatz [0047] - Absatz [0047]; Abbildungen 11b,11c,11d * | 1,3-6 | |
| | ----- | | |
| Y | WRIGHT N W ET AL: "BASIC HONING & ADVANCED FREE-FORM HONING", GEAR TECHNOLOGY, RANDALL PUBLISHING CO. ELK GROVE, ILLINOIS, US, Bd. 14, Nr. 4, 1. Juli 1997 (1997-07-01), Seiten 26-33, XP000655292, ISSN: 0743-6858 * das ganze Dokument * | 7-10 | **RECHERCHIERTE SACHGEBIETE (IPC)** B23F F16H |
| | ----- | | |
| A | EP 0 993 908 A2 (HAUG ERICH [DE]) 19. April 2000 (2000-04-19) * Absatz [0001] - Absatz [0004] * | 1-10 | |
| | ----- | | |

Der vorliegende Recherchenbericht wurde für alle Patentansprüche erstellt

| Recherchenort | Abschlußdatum der Recherche | Prüfer |
|---|---|---|
| München | 14. Mai 2014 | Watson, Stephanie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 13 19 3983

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2014

| Im Recherchenbericht angeführtes Patentdokument | Datum der Veröffentlichung | Mitglied(er) der Patentfamilie | | Datum der Veröffentlichung |
|---|---|---|---|---|
| US 2007017314 A1 | 25-01-2007 | JP | 2007024296 A | 01-02-2007 |
| | | US | 2007017314 A1 | 25-01-2007 |
| US 2005160857 A1 | 28-07-2005 | DE | 102005001448 A1 | 18-08-2005 |
| | | JP | 4507238 B2 | 21-07-2010 |
| | | JP | 2005201375 A | 28-07-2005 |
| | | US | 2005160857 A1 | 28-07-2005 |
| JP S61133163 U | 20-08-1986 | JP | H0222520 Y2 | 18-06-1990 |
| | | JP | S61133163 U | 20-08-1986 |
| EP 1770308 A2 | 04-04-2007 | CN | 1940350 A | 04-04-2007 |
| | | EP | 1770308 A2 | 04-04-2007 |
| | | JP | 4868893 B2 | 01-02-2012 |
| | | JP | 2007120743 A | 17-05-2007 |
| | | US | 2007137355 A1 | 21-06-2007 |
| | | US | 2010011895 A1 | 21-01-2010 |
| EP 0993908 A2 | 19-04-2000 | DE | 19847723 A1 | 27-04-2000 |
| | | EP | 0993908 A2 | 19-04-2000 |

EPO FORM P0461

Für nähere Einzelheiten zu diesem Anhang : siehe Amtsblatt des Europäischen Patentamts, Nr.12/82